# EUROPÄISCHE PATENTSCHRIFT

(11) **EP 1 534 882 B1**
(45) Veröffentlichungstag und Bekanntmachung des Hinweises auf die Patenterteilung: **13.06.2007**
(21) Anmeldenummer: 03793457.7
(22) Anmeldetag: 01.09.2003
(51) Int. Cl.: D01F 2/00

(54) **VERWENDUNG VON CELLULOSEFASERN**
USE OF CELLULOSE FIBERS
UTILISATION DE FIBRES DE CELLULOSE

(30) Priorität: 03.09.2002 AT 13162002
(43) Veröffentlichungstag der Anmeldung: 01.06.2005
(73) Patentinhaber: LENZING AKTIENGESELLSCHAFT, 4860 Lenzing (AT)
(72) Erfinder: MÄNNER, Johann, A-4852 Weyregg (AT); FEILMAIR, Wilhelm, A-4863 Seewalchen (AT)
(74) Vertreter: Nemec, Harald
(86) Internationale Anmeldenummer: PCT/AT2003/000251
(87) Internationale Veröffentlichungsnummer: WO 2004/022822

(56) Entgegenhaltungen:
- WO-A-99/16705
- ALBRECHT W ET AL: "LYOCELL-FASERN (ALTERNATIVE CELLULOSEREGENERATFASERN)" MELLIAND TEXTILBERICHTE, INTERNATIONAL TEXTILE REPORTS, MELLIAND TEXTILBERICHTE K.G. HEIDELBERG, DE, Bd. 78, Nr. 9, 1. September 1997 (1997-09-01), Seiten 575-581, XP000720434 ISSN: 0341-0781
- ALLISON L: ""Lyocell"" THE COSTUME GALLERY, TEXTILE REFERENCE MANUAL, [Online] 2002, XP002267173 Gefunden im Internet: <URL:http://www.costumegallery.com/Textile s/lyocell.htm> [gefunden am 2004-01-15]

## Beschreibung

Die vorliegende Erfindung betrifft die Verwendung eines textilen Artikels, welcher eine Cellulosefaser der Gattung Lyocell enthält.

Es ist bekannt, Cellulosefasern mittels Zusätzen antimikrobielle Eigenschaften zu verleihen.

Aus der US 3,296,000 ist bekannt, Viskosefasern mit 3,4,4'-Trichlorcarbanilid zu modifizieren, um bakteriostatische Eigenschaften zu erzielen.

Die EP-A 0728 855 beschreibt die Herstellung von Fasern unterschiedlichster Herkunftsformen, u.a. Cellulosefasern mit desodorierenden Eigenschaften. Dabei werden Photokatalysatoren, insbesondere Titanoxid (TiO₂), eingesetzt. Zusätzlich wird ein Adsorbens in Form eines Phosphates eines tetravalenten Metalles und eines Hydroxides eines divalenten Metalles eingesetzt. Die EP-A 0 728 855 beschreibt weiters, daß zusätzlich zu der Substanz mit desodorierender Wirkung eine metallische Komponente (z.B. Silber, Kupfer oder Zink) als antimikrobielle Komponente eingesetzt werden kann.

Aus der Marktstudie "Functional Fibers - Trends and Product Development in Japan" des Toray Research Center Inc., 1993, sind unter den Markennamen "CELFRESH", "PC Rayon", "CELEEL" und "CELCLEAN" Viskosefasern bekannt, welche antibakterielle und geruchshemmende Eigenschaften aufweisen sollen.

Im Fall der Faser "CELFRESH" wird der Viskose Aktivkohle in einem Gehalt von ca. 30% zugegeben. Im Fall der Faser "PC Rayon" wird der Viskose ein Metallphtalocyaninderivat zugegeben. Bei den Fasern "CELBEL" und "CELCLEAN" werden auf die bereits ersponnenen Fasern während des Nachbehandlungsprozesses Metallionen aufgebracht.

Der Einsatz von Aktivkohle oder metallischen Komponenten hat aber den Nachteil, daß diese Komponenten, wie z.B. auch aus der oben zitierten Marktstudie hervorgeht, gefärbt sind und daher den Weißgrad der resultierenden Faser negativ beeinflussen. Insbesondere im sogenannten Lyocellverfahren zur Herstellung cellulosischer Fasern ist zusätzlich problematisch, daß viele metallische Komponenten die Stabilität der Celluloselösung herabsetzen.

Bekannt ist auch z.B. aus der US-A 5,320,903 oder aus der PCT-WO 94/09192 der Einsatz von Chitosan, um cellulosischen Regeneratfasern desodorierende und/oder antifungale Eigenschaften bzw. bak-teriostatische Eigenschaften zu verleihen.

Es ist weiters bekannt, Fasern oder textile Produkte mit antimikrobiellen Mitteln auszurüsten.

Ein Nachteil von Zusätzen oder Ausrüstungen sind die möglichen toxikologischen und auch ökologischen Auswirkungen, z. B. durch allergische Reaktionen oder auch die Freisetzung in die Umwelt beim Waschen der daraus hergestellten Produkte.

Umgebungen mit erhöhter Luftfeuchtigkeit begünstigen das Wachstum von Mikroorganismen, insbesondere Schimmelpilzen, z. B. bei Bettware, insbesondere Füllungen für Bettwäsche- und Polster. Diese Schimmelpilze bilden auch die Nahrungsgrundlage für Milben.

Es besteht daher nach wie vor der Bedarf an cellulosischen Fasern mit bioziden Eigenschaften, die daneben hautverträglich sind.

Die vorliegende Erfindung betrifft die Verwendung eines textilen Artikels, welcher mindestens 10 Gew.% an cellulosischem Material enthält, welches zu 30 bis 100 Gew.% aus einer Cellulosefaser der Gattung Lyocell besteht, die durch eine biologische Abbaurate nach 20 Wochen (gemessen gemäß dem unten beschriebenen Erdeingrabungstest) von weniger als 60 % gekennzeichnet ist und im wesentlichen frei von antimikrobiellen Substanzen ist, als bioaktives Produkt zur Verzögerung bzw. Verhinderung des Wachstums von Mikroorganismen.

"Im wesentlichen frei" bedeutet, daß die Faser abgesehen von Substanzen, die aufgrund der üblichen Bedingungen des jeweiligen Herstellungsverfahrens in der Faser enthalten sind und möglicherweise auch antimikrobielle Wirksamkeit entfalten, keine zusätzlichen antimikrobiellen Wirkstoffe enthält.

Bevorzugt weist die im erfindungsgemäß verwendeten textilen Artikel enthaltene Cellulosefaser eine biologische Abbaurate nach 20 Wochen von weniger als 40 %, besonders bevorzugt von weniger als 30 % auf.

Die im erfindungsgemäß verwendeten Artikel enthaltene Cellulosefaser ist bevorzugt dadurch gekennzeichnet, daß die Note für die Anfälligkeit gegenüber *Eurotium rubrum* bei 85% Luftfeuchtigkeit nach 4 Wochen (gemessen gemäß unten beschriebenem Test, Durchschnitt aus drei Messungen) weniger als 2 beträgt. Besonders bevorzugt beträgt die Note für die Anfälligkeit gegenüber *Eurotium rubrum* bei 85% Luftfeuchtigkeit nach 4 Wochen 1 oder weniger.

Die im erfindungsgemäß verwendeten Artikel enthaltene Cellulosefaser weist bevorzugt sowohl die oben angegebene Abbaurate als auch die oben angegebene Note für die Anfälligkeit gegenüber *Eurotium rubrum* auf.

Überraschenderweise wurde gefunden, daß bei Lyocellfasern im Vergleich zu anderen cellulosischen Fasern wie Baumwolle oder Viskosefasern das Wachstum von Mikroorganismen verzögert bzw. verhindert wird.

Bei Lösungsmittelspinnverfahren wird die Cellulose direkt ohne Ausbildung eines Derivates in einem organischen Lösungsmittel gelöst und die Lösung versponnen. Solche Fasern haben auch den Namen "lösungsmittelgesponnene" oder "Lyocell"-Fasern. "Lyocell" ist der von der BISFA (The International Bureau for the Standardization of man made fibers) vergebene Gattungsnamen für Cellulosefasern, welche dadurch hergestellt werden, daß Cellulose ohne Ausbildung eines Derivates in einem organischen Lösungsmittel aufgelöst wird und aus dieser Lösung Fasern mittels eines Trocken-Naß-Spinnverfahrens oder eines Melt-Blown-Verfahrens extrudiert werden. Unter einem organischen Lösungsmittel wird dabei ein Gemisch aus einer organischen Chemikalie und Wasser verstanden. Als organisches Lösungsmittel wird heute in kommerziellem Maßstab N-Methyl-Morpholin-N-Oxid eingesetzt.

Die Lösung der Cellulose wird in diesem Verfahren üblicherweise mittels eines Formwerkzeuges extrudiert und dabei ausgeformt. Die ausgeformte Lösung gelangt über einen Luftspalt in ein Fällbad, wo durch Ausfällen der Lösung der Formkörper erhalten wird. Der Formkörper wird gewaschen und ggf. nach weiteren Behandlungsschritten getrocknet. Ein Verfahren zur Herstellung von Lyocellfasern ist z.B. in der US-A 4,246,221 beschrieben. Lyocellfasern zeichnen sich durch eine hohe Festigkeit, einen hohen Naßmodul und durch eine hohe Schlingenfestigkeit aus.

WO 99/16705 A1 und Albrecht et al. "Lyocell-Fasern", Melliand Textilberichte, Vol. 78 (9) 1997, S. 575-581 beschreiben Lyocell-Fasern, Lyocell-Fasern enthaltende Fasergemische und deren Verwendung.

Der erfindungsgemäß verwendete textile Artikel kann in Form von Garnen, Geweben, Gewirken, Nonwovens und sonstigen textilen Artikeln vorliegen. Insbesondere kann die Lyocellfaser als Bestandteil von Heimtextilien wie z.B. Decken, Pölstern, Möbel, Matratzen, Handtücher, Bettwäsche, insbesondere als Füllfaser in Decken, Pölstern, Matratzen und Möbel, eingesetzt werden.

Der textile Artikel kann z.B. in Form einer Heimtextilie, welcher die Cellulosefaser enthält, vorliegen.

Der erfindungsgemäß verwendete textile Artikel enthält einen Anteil an cellulosischem Material von mindestens 10 Gew.%. Im Fall von Möbeln bezieht sich dieser Anteil auf die textilen Bestandteile (Überzug etc.) des Möbelstückes.

Aufgrund der Beständigkeit der erfindungsgemäßen Cellulosefaser gegenüber Schimmelpilzen wird Milben und dergleichen die Nahrungsgrundlage entzogen. Erfindungsgemäß verwendete textile Artikel eignen sich daher auch besonders gut als Antimilbenprodukte.

### Beispiele:

### Biologische Abbaubarkeit

Es wurden Lyocellfasern (CLY') mit Baumwolle (BW) und Viskosefasern (CV) in einem Erdeingrabungstest verglichen. Gegenüber anderen Cellulosefasern wie BW und CV zeigen Lyocellfasern ein deutlich verzögertes Abbauverhalten bzw. Bioaktivität.

### Erdeingrabungstest:

Ca. 1g kardierte lufttrockene Faservliese (ca. 6x6 cm) werden in eine grobmaschige Tasche aus Kunststoffgewebe (Insektenschutznetz) gegeben und mit Klebeband verschlossen. Die Proben werden in einem Gefäß (Blumenkiste ca. 100 x 20 x 15 cm) in Gartenbauerde (Spezial Humus, Fa. Gartenhilfe GmbH 4030 Linz) mittig eingegraben und bei Raumtemperatur (20 - 25°C) im Dunkeln aufgestellt. Die Erde wird duch Bewässsern mit Leitungswasser feucht gehalten. In bestimmten Zeitabständen werden die Proben ausgegraben, getrocknet und gewogen. Über den Beobachtungszeitraum wird der Abbaufaktor durch die Gewichterfassung und optisch ermittelt.

Die Ergebnisse sind in der folgenden Tabelle dargestellt:

| | **% Abbau nach Wochen** | | | | | |
|---|---|---|---|---|---|---|
| **Faser** | 2 | 4 | 8 | 12 | 16 | 20 |
| Baumwolle (BW) | 34 | 52 | 77 | 88 | 94 | 100 |
| Viskose (CV), 6,7 dtex | 10 | 48 | 57 | 61 | 64 | 69 |
| Lyocell (CLY), 6,7 dtex SI | 11 | 14 | 15 | 19 | 21 | 28 |
| Lyocell (CLY), 6,7 dtex | 9 | 12 | 13 | 15 | 16 | 20 |

Bei der Lyocellfaser mit der Bezeichnung "SI" handelt es sich um eine mit Silikon ausgerüstete Lyocellfaser.

Vergleicht man die Viskosefaser mit einem Titer von 6,7 dtex mit den Lyocellfasern mit einem Titer von ebenfalls 6,7 dtex, zeigt sich nach 20 Wochen ein Unterschied in der Abbaurate von 40 - 50%.

Es zeigt sich, dass die biologische Abbaurate von Lyocellfasern um 50% geringer ist als bei Viskose und um 80% geringer als bei BW.

### Prüfung von Fasern auf Schimmelpilzanfälligkeit

Die im folgenden beschriebenen Versuche wurden bei der EMPA (Eidgenössische Materialprüfungs- und Forschungsanstalt) durchgeführt.

Die Prüfung erfolgt in Anlehnung an die Norm CEN/TC 248/WG13/Doc N 142 - Methode A2, bei der das Wachstum des Schimmelpilzes "Eurotium rubrum" bei Raumtemperatur und 75, 85 und 100% Luftfeuchtigkeit beobachtet wird.

Die Feuchtigkeit in der Feuchtekammer wurde durch

| | |
|---|---|
| NaCl | für 75 % |
| KCl | für 85 % und |
| Wasser | Für > 95 % |

eingestellt.

Als Pilz wurde generell *Eurotium rubrum* EMPA 633 verwendet, die Sporendichte der Animpfung betrug 10⁶ pro ml.

Das Pilzwachstum an den Proben wird anhand des folgenden Schemas evaluiert:

| **Wachstumsrate (Note)** | **Bewertung** |
|---|---|
| 0 | Kein Wachstum unter dem Mikroskop sichtbar (50-fache Vergrößerung) |
| 1 | Kein Wachstum mit bloßem Auge sichtbar, aber deutlich unter dem Mikroskop sichtbar |
| 2 | Wachstum für das bloße Auge sichtbar, bedeckt bis zu 25 % der Testoberfläche |
| 3 | Wachstum für das bloße Auge sichtbar, bedeckt bis zu 50 % der Testoberfläche |
| 4 | Beträchtliches Wachstum, bedeckt mehr als 50 % der Testoberfläche |
| 5 | Starkes Wachstum, bedeckt die gesamte Testoberfläche |

Eine Lyocellfaser zeigt, wie aus der folgenden Tabelle hervorgeht, nach 4 Wochen bei 85% Luftfeuchtigkeit gegenüber Viskosefasern ein eindeutig gehemmtes Pilzwachstum.

| **Muster** | *Eurotium rubrum* | | |
|---|---|---|---|
| | **Luftfeuchtigkeit** | | |
| | **75%** | **85%** | **100%** |
| 1 CLY 6,7 dtex SI | 0/0/0 | 0/1/1 | 5/5/4 |
| 2 CLY 6,7 dtex | 0/0/0 | 0/0/0 | 5/4/1 |
| 3 CV 3,3 dtex | 0/0/0 | 3/4/4 | 5/5/4 |

## Patentansprüche

1. Verwendung eines textilen Artikels, welcher mindestens 10 Gew.% an cellulosischem Material enthält, welches zu 30 bis 100 Gew.% aus einer Cellulosefaser der Gattung Lyocell besteht, die **dadurch gekennzeichnet ist, dass** sie eine biologische Abbaurate nach 20 Wochen von weniger als 60 % aufweist und im wesentlichen frei von antimikrobiellen Substanzen ist, als bioaktives Produkt zur Verzögerung bzw. Verhinderung des Wachstums von Mikroorganismen.

2. Verwendung nach Anspruch 1 als Antimilbenprodukt.

3. Verwendung nach einem der vorhergehenden Ansprüche, **dadurch gekennzeichnet, dass** der textile Artikel als Garn, Gewebe, Gewirke oder Nonwovens vorliegt.

4. Verwendung nach Anspruch 3, **dadurch gekennzeichnet, dass** der textile Artikel eine Heimtextilie ist, welcher die Cellulosefaser als Füllfaser enthält.

5. Verwendung nach einem der vorhergehenden Ansprüche **dadurch gekennzeichnet, dass** die Cellulosefaser eine biologische Abbaurate nach 20 Wochen von weniger als 40 % aufweist.

6. Verwendung nach einem der vorhergehenden Ansprüche, **dadurch gekennzeichnet, dass** die Cellulosefaser eine biologische Abbaurate nach 20 Wochen von weniger als 30 % aufweist.

7. Verwendung nach einem der vorhergehenden Ansprüche, **dadurch gekennzeichnet, dass** die Cellulosefaser eine Note für die Anfälligkeit gegenüber *Eurotium rubrum* bei 85% Luftfeuchtigkeit nach 4 Wochen von weniger als 2 aufweist.

8. Verwendung nach Anspruch 7, **dadurch gekennzeichnet, dass** die Cellulosefaser eine Note für die Anfälligkeit gegenüber *Eurotium rubrum* bei 85% Luftfeuchtigkeit nach 4 Wochen von 1 oder weniger aufweist.

## Claims

1. The use of a textile article containing at least 10% by weight of a cellulosic material consisting by 30 to 100% by weight of a cellulose fibre of the Lyocell type, said fibre being **characterized in that** it has a biodegradation rate of less than 60% after 20 weeks and is basically free from antimicrobial substances, as a bioactive product for the delay or prevention, respectively, of the growth of microorganisms.

2. The use according to claim 1 as an anti-mite product.

3. The use according to any of the preceding claims, **characterized in that** the textile article is present as a yarn, a fabric, a knitted fabric or a nonwoven article.

4. The use according to claim 3, **characterized in that** the textile article is a home textile containing the cellulose fibre as a filling fibre.

5. The use according to any of the preceding claims, **characterized in that** the cellulose fibre has a biodegradation rate of less than 40% after 20 weeks.

6. The use according to any of the preceding claims, **characterized in that** the cellulose fibre has a biodegradation rate of less than 30% after 20 weeks.

7. The use according to any of the preceding claims, **characterized in that** the cellulose fibre has a note for the susceptibility to *Eurotium rubrum* of less than 2 after 4 weeks at an air humidity of 85%.

8. The use according to claim 7, **characterized in that** the cellulose fibre has a note for the susceptibility to *Eurotium rubrum* of 1 or less after 4 weeks at an air humidity of 85%.

## Revendications

1. Utilisation d'un objet textile qui contient au moins 10 % en poids de matière cellulosique constituée de 30 à 100 % en poids d'une fibre de cellulose de type Lyocell, laquelle utilisation est **caractérisée en ce qu'**elle présente après 20 semaines un degré de décomposition biologique inférieur à 60 % et est essentiellement exempte de substances anti-microbiennes, comme produit bioactif de ralentissement ou d'inhibition de la croissance de micro-organismes.

2. Utilisation selon la revendication 1 comme produit anti-acariens.

3. Utilisation selon l'une des revendications précédentes, **caractérisée en ce que** l'objet textile présente la forme d'un fil, d'un tissu, d'un tricot ou d'un non-tissé.

4. Utilisation selon la revendication 3, **caractérisée en ce que** l'objet textile est un produit textile domestique qui contient des fibres de cellulose comme fibres de charge.

5. Utilisation selon l'une des revendications précédentes, **caractérisée en ce que** les fibres de cellulose ont un degré de décomposition biologique après 20 semaines inférieur à 40 %.

6. Utilisation selon l'une des revendications précédentes, **caractérisée en ce que** les fibres de cellulose ont un degré de décomposition biologique après 20 semaines inférieur à 30 %.

7. Utilisation selon l'une des revendications précédentes, **caractérisée en ce qu'**à 85 % d'humidité de l'air et après 4 semaines, les fibres de cellulose présentent une cotation de sensibilité vis-à-vis *d'Eurotium rubrum* de moins de 2.

8. Utilisation selon la revendication 7, **caractérisée en ce qu'**à 85 % d'humidité de l'air et après 4 semaines, les fibres de cellulose présentent une cotation de sensibilité vis-à-vis *d'Eurotium rubrum* de 1 ou moins.
